# EUROPEAN PATENT APPLICATION

(11) **EP 4 811 133 A1**
(43) Date of publication of application: **23.09.2026**
(21) Application number: 26158961.8
(22) Date of filing: 17.02.2026
(51) Int. Cl.: G06F 9/50

(54) **AUTOMATED DEPLOYMENT AND MAINTENANCE OF A CLOUD FLEET**

(30) Priority: 21.02.2025 US 202519059428
(71) Applicant: Microsoft Technology Licensing, LLC, Redmond, WA 98052-6399 (US)
(72) Inventor: Khandelwal, Yash, Redmond, WA, 98052 (US); Patwa, Pritesh, Redmond, WA, 98052 (US); Mohammed, Yunus, Redmond, WA, 98052 (US); Ramachandran, Rajeesh, Redmond, WA, 98052 (US); Sharma, Rahul, Redmond, WA, 98052 (US)
(74) Representative: Grünecker Patent- und Rechtsanwälte PartG mbB

(57) **Abstract**

Automated deployment and maintenance of a cloud fleet, including: receiving a request to generate a cloud fleet in a cloud computing environment, the request including a listing of selectable cloud computing instance configurations, an allocation strategy, and a resource allocation; selecting, for each cloud computing instance configuration of one or more cloud computing instance configurations included in the listing of selectable cloud computing instance configurations, based a capacity of the cloud computing environment, a corresponding number of instances to satisfy the resource allocation, including selecting one or more cloud computing instance configurations from the listing of selectable cloud computing instance configurations based on the allocation strategy; and creating based on the corresponding number of instances for each cloud computing instance configuration, the cloud fleet comprising at least one of: one or more on-demand cloud computing instances and one or more spot cloud computing instances.

## Description

### BACKGROUND

Cloud computing platforms allow users to run applications or other workloads using cloud computing instances such as virtual machines. Cloud computing platforms may offer different configurations of these cloud computing instances, as well as different types of instances that may or may not be subject to automatic eviction based on available capacity. Each type and configuration of cloud computing instance may be offered at different price points, allowing users to tailor their cloud fleets to their particular needs and budgets.

In order to allow users to create and manage their cloud fleets, cloud computing platforms may offer various systems and interfaces. In some existing implementations, creation of a cloud fleet using these systems may require a user to explicitly indicate the particular configurations and number of instances for those configurations to be included in the cloud fleet. It may be difficult for a user to ultimately choose which configurations to use when presented with a large number of options. As these cloud fleets are created using specifically defined configurations and instances, the cloud computing platforms may not be able to adapt the cloud fleet on creation when unable to satisfy these specifically defined conditions. Moreover, it may be difficult for a user to select the particular configurations and numbers of instances that satisfy their particular goals or limitations, such as budgetary or capacity requirements.

Additionally, in some existing implementations, on-demand instances and spot instances may be created and managed though separate systems or interfaces. Due to these considerations, the process of creating and maintaining a cloud fleet may become complicated and cumbersome for some users, potentially deterring them from using the cloud platform.

### SUMMARY

According to embodiments of the present disclosure, various methods, apparatus, and products for automated deployment and maintenance of a cloud fleet are described herein. In some aspects, automated deployment and maintenance of a cloud fleet includes: receiving a request to generate a cloud fleet in a cloud computing environment, wherein the request comprises a listing of selectable cloud computing instance configurations, an allocation strategy, and a resource allocation comprising at least one of: an on-demand resource requirement and a spot resource requirement; selecting, for each cloud computing instance configuration of one or more cloud computing instance configurations included in the listing of selectable cloud computing instance configurations, based a capacity of the cloud computing environment, a corresponding number of instances to satisfy the resource allocation, wherein selecting, for each cloud computing instance configuration of the one or more cloud computing instance configurations, the corresponding number of instances to satisfy the resource allocation comprises: selecting one or more cloud computing instance configurations from the listing of selectable cloud computing instance configurations based on the allocation strategy; and creating based on the corresponding number of instances for each cloud computing instance configuration, the cloud fleet comprising at least one of: one or more on-demand cloud computing instances and one or more spot cloud computing instances. In some aspects, an apparatus may include a memory and one or more processing devices, operatively coupled to the memory, the one or more processing devices configured to perform similar steps. In some aspects, a computer program product comprising a computer readable storage medium may store computer program instructions that, when executed, perform similar steps.

### BRIEF DESCRIPTION OF DRAWINGS

Fig. 1 sets forth an example system for automated deployment and maintenance of a cloud fleet in accordance with some embodiments of the present disclosure.
Fig. 2 sets forth a flow chart illustrating an example method of automated deployment and maintenance of a cloud fleet in accordance with some embodiments.
Fig. 3 sets forth a flow chart illustrating an additional example method of automated deployment and maintenance of a cloud fleet in accordance with some embodiments.
Fig. 4 sets forth a flow chart illustrating an additional example method of automated deployment and maintenance of a cloud fleet in accordance with some embodiments.
Fig. 5 sets forth a flow chart illustrating an additional example method of automated deployment and maintenance of a cloud fleet in accordance with some embodiments.
Fig. 6 sets forth a flow chart illustrating an additional example method of automated deployment and maintenance of a cloud fleet in accordance with some embodiments.
Fig. 7 sets forth a flow chart illustrating an additional example method of automated deployment and maintenance of a cloud fleet in accordance with some embodiments.
Fig. 8 illustrates an exemplary computing device that may be specifically configured to perform one or more of the processes described in the present disclosure.
Fig. 9 sets forth a block diagram of a cloud service provider service architecture in accordance with some embodiments of the present disclosure.

### DESCRIPTION OF EMBODIMENTS

Cloud computing platforms allow users, enterprises, or other groups of users (referred to hereafter as 'users') to run applications or other workloads using cloud computing instances, which may logically be grouped together as a cloud fleet. As different users may have different needs, these cloud computing platforms may offer many different types of cloud computing instances, such as virtual machines, for users to use in their deployments, each with their own configurations and offered at varying price points. Cloud computing platforms may also offer both on-demand cloud computing instances, which users may create and remove at will, and spot cloud computing instances that may be automatically removed as needed based on the overall resource availability of the cloud computing platform.

In some existing implementations, systems for creating a cloud fleet may require a user to select particular cloud computing instance configurations to use and how many instances of each cloud computing instance should be created. Where a large number of options are available, it may be difficult for users to ultimately choose how many of which cloud computing instance configurations to use. As these cloud fleets are created based on specifically defined criteria, there is no flexibility to adapt a newly created cloud fleet to conditions in the cloud environment that may make satisfying these conditions impossible, such as where there is an insufficient number of resources for some number of instances and/or for some configurations. Moreover, in some existing implementations, cloud computing platforms may offer different interfaces and systems for managing on-demand cloud computing instances and spot cloud computing instances. These factors may overcomplicate the process for creating and managing a cloud fleet, leading to a negative user experience.

To address these shortcomings, the approaches set forth herein provide a single system that may be used to create and manage the on-demand and spot cloud computing instances of a cloud fleet. A request, such as an application programming interface (API) call, may include various requirements for a cloud fleet. These requirements may include a resource allocation defining amounts of resources for on-demand and spot cloud computing instances, a listing of selectable cloud computing instance configurations, and an allocation strategy defining how particular cloud computing instance configurations will be selected for inclusion in the cloud fleet. Using these requirements, particular numbers of cloud computing instance instances for particular cloud computing instance configurations are automatically determined. The cloud fleet is then created using these determined numbers of cloud computing instances and cloud computing instance configurations. As the particular configurations and numbers of instances are dynamically determined, this allows for creation of the cloud fleet to adapt to current resource availability, in contrast to other solutions requiring specifically enumerated configurations and numbers of instances. This system may also automatically manage cloud computing instances based on changes to the resource requirements or to ensure that these resource requirements continue to be satisfied.

Providing more features and options for cloud computing platforms may provide flexibility and customizability at the cost of increased complexity. Users are less likely to engage with cloud computing platforms that they deem to be overly complex or difficult to use, causing loss of revenue to the provider of the cloud computing platform. The approaches set forth herein provide approaches for automatic creation and management of both on-demand and spot cloud computing instances in a cloud fleet using a single system. This improves the overall user experience, incentivizing users towards the cloud computing platform and increasing revenue for the provider. Likewise, the user experience may be improved through the usage of improved cloud management capabilities where cloud computing resources may be created and maintained in a less burdensome manner relative to systems that require the specific enumeration of cloud computing resources.

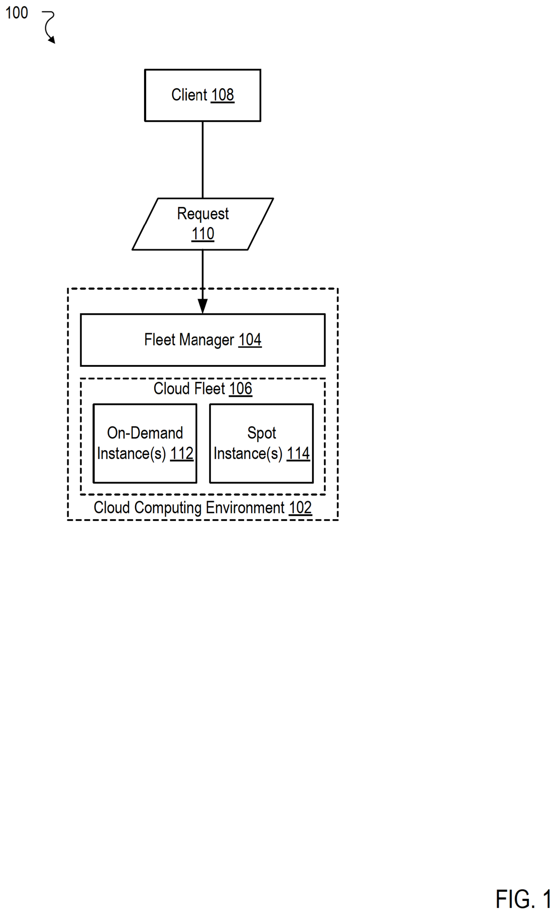

Turning now to Fig. 1, shown is a diagram of an example system 100 for automated deployment and maintenance of a cloud fleet in accordance with some embodiments of the present disclosure. The system 100 includes a cloud computing environment 102. The cloud computing environment 102 is a set of hardware and software resources that allow for the creation and management of cloud-based computing resources. For example, the cloud computing environment 102 may support a particular cloud computing platform for creating and managing these cloud-based computing resources.

The system 100 also includes a fleet manager 104. Although the fleet manager 104 is shown as being executed within the cloud computing environment 102, readers will appreciate that, in some embodiments, the fleet manager 104 is executed in a separate computing device or computing environment that is communicatively coupled to the cloud computing environment 102 (e.g., via a network or other communications path). The fleet manager 104 is a process, service, and/or application that facilitates the creation and management of cloud-based computing resources in the cloud computing environment with respect to particular cloud fleets 06, described below. In other words, the fleet manager 104 may manage resources on the fleet level, and may itself be a component of a cloud manager managing resources across the cloud environment. For example, the fleet manager 104 may expose one or more interfaces, such as an application programming interface (API), that allows users to create and manage cloud-based computing instances in association with a particular account of the cloud computing environment 102 or cloud computing platform.

In some embodiments, to facilitate creation of a cloud fleet 106 in the cloud computing environment 102, the fleet manager 104 accepts, from a client 108, a request 110 to create a cloud fleet 106 in the cloud computing environment 102. A cloud fleet 106 is a logical grouping of cloud computing resources. For example, the cloud fleet 106 may include one of potentially many groupings of cloud computing resources associated with a particular user, account, and the like. In some embodiments, the cloud computing resources within a particular cloud fleet 106 includes interconnected or interoperating cloud computing resources, or cloud computing resources that are otherwise logically grouped to facilitate central management and configuration of these resources.

A cloud fleet 106 may include one or more instances of cloud computing resources, including virtual machines or other cloud computing resources as can be appreciated. In some embodiments, a cloud fleet 106 includes one or more on-demand cloud computing resource instances, shown as on-demand instances 112. On-demand instances 112 are instances of cloud computing resources that may be created (e.g., instantiated) in and deleted or removed from the cloud fleet 106 at will, such as in response to particular user commands or requests. In other words, an on-demand instance 112, once created, will remain until explicitly removed by a user. In some embodiments, accounts associated with on-demand instances 112 are charged costs by a cloud service provider based on the length of time that the on-demand instance 112 is executed.

In some embodiments, a cloud fleet 106 includes one or more spot cloud computing instances, shown as spot instances 114. Spot instances 112 are instances of cloud computing resources similar to on-demand instances 112, differing in that spot instances 112 may be automatically removed (e.g., deleted or deallocated) based on overall capacity of the cloud computing environment 102. As the cloud computing environment 102 has a limited amount of overall capacity (e.g., computing capacity) that may be potentially shared across multiple cloud fleets 106, the cloud computing environment 102 may require that some amount of capacity used by a spot instance 114 to be freed for use elsewhere. Accordingly, in some embodiments, the cloud computing environment 102 can automatically remove spot instances 114 from a cloud fleet 106 based on changes in capacity. Thus, in contrast to on-demand instances 112 that will only be removed when explicitly removed by a user, spot instances 114 may be automatically removed based on changes in capacity of the cloud computing environment 102, and potentially based on other metrics.

The request 110 to create the cloud fleet 106 may include an API call or other command as can be appreciated. In some embodiments, the request 110 includes various parameters of the cloud fleet 106 that are used by the fleet manager 104 in creating the cloud fleet 106. In some embodiments, the request 110 includes a resource allocation. A resource allocation describes amounts of computational resources required for on-demand instances 112 and/or spot instances 114 for the cloud fleet 106. For example, the resource allocation can include an on-demand resource requirement, an amount of computational resources required for on-demand instances 112. As another example, the resource allocation can include a spot resource requirement representing an amount of computational resources required for spot instances 114.

In some embodiments, the on-demand resource requirement and the spot-resource requirement are expressed as a total number of cores (e.g., virtual central processing unit (vCPU) cores) to be included in the on-demand instances 112 and/or spot instances 114, respectively. For example, the on-demand resource requirement may indicate that the on-demand instances 112 should include, in total, one thousand cores while the spot resource requirement may indicate that spot instances 114 should include, in total, two hundred cores. In some embodiments, the on-demand resource requirement and the spot-resource requirement can include a number of on-demand instances 112 and/or spot instances 114 to include in the cloud fleet 106. For example, the on-demand resource requirement may indicate that the cloud fleet 106 should include five hundred on-demand instances 112 while the spot resource requirement may indicate the cloud fleet 106 should include twenty spot instances 114.

In some embodiments, the request 110 includes a listing of selectable cloud computing instance configurations, hereinafter referred to as "configurations" for conciseness. A cloud service provider may offer various configurations for cloud computing instances (e.g., on-demand instances 112 and/or spot instances 114). Each configuration may describe various attributes of an instance having that configuration. Such attributes may include, for example, a number of vCPUs, what type of physical CPU will be used to support the instance, amounts of memory, amounts and types of local and/or remote storage (e.g., a number of discs, amounts of memory per disc, maximum input/output operations (IOPS) per second, maximum bandwidth), network resources (e.g., numbers of network interface cards (NICs), maximum bandwidth), and the like. Each configuration may correspond to different price points or pricing models, thereby allowing users to use, in their cloud fleet 106, virtual machine or other instance configurations meeting the needs of their supported workloads, budgets, and other factors. In some embodiments, configurations are logically grouped into families or other groupings of configurations.

In some embodiments, the cloud computing environment 102 has different amounts of computational resources reserved or made available for each available configuration. Each configuration may therefore have some amount of allocated capacity in the cloud computing environment 102. Accordingly, in some embodiments, each configuration can have some amount of available capacity based on the amount of used capacity for cloud computing instances of that configuration.

As will be described in further detail below, the fleet manager 104 will automatically select the particular configurations and numbers of instances for each selected configuration to be included in the cloud fleet 106. The listing of selectable configurations included in the request 110 includes a listing or enumeration of configurations from which the fleet manager 104 may select the configurations to include in the cloud fleet 106. For example, where the cloud service provider offers configurations A, B, C, D, and E and the request 110 includes a listing of selectable configurations A, C, and D, the fleet manager 104 will only include, in the cloud fleet 106, instances of configurations A, C, and/or D. Continuing with this example, where the request 110 includes an on-demand resource requirement of one thousand cores, the fleet manager 104 will select instances totaling one thousand cores from configurations A, C, and/or D. In some embodiments, the listing of selectable configurations includes a ranked or unranked (e.g., ordered or unordered) listing of selectable configurations.

In some embodiments, the request 110 includes an allocation strategy. An allocation strategy defines criteria or approaches used by the fleet manager 104 in selecting the particular configuration(s) for instances in the cloud fleet 106 (e.g., from the listing of selectable configurations described above). This allocation strategy may be used for selecting the particular configuration(s) used when creating the cloud fleet 106 and when selecting a particular configuration to be used for instances automatically created after the cloud fleet 106 has been created, such as spot instances 114. In some embodiments, the allocation strategy is one of multiple predefined, selectable allocation strategies, with the request 110 including an indication of the particular allocation strategy to be used.

In some embodiments, the request 110 includes separate allocation strategies for on-demand instances 112 and spot instances 114. Alternatively, the request 110 can include an allocation to be applied to both on-demand instances 112 and spot instances 114. In some embodiments, where the request 110 does not include an allocation strategy for on-demand instances 112 and/or spot instances 114, a default allocation strategy is used. Thus, in some embodiments, the request 110 includes an implied indication of a default allocation strategy by virtue of not explicitly indicating an allocation strategy to be used.

In some embodiments, the allocation strategy includes a capacity-optimized allocation strategy. Under a capacity-optimized allocation strategy, instances will be created using the selectable configuration with the most available capacity. In some embodiments, the allocation strategy includes a price-optimized allocation strategy. Under a price-optimized allocation strategy, instances will be created using the lowest cost configuration of the selectable configurations until a resource requirement has been satisfied. Should there not be enough available capacity for this lowest cost configuration to satisfy the corresponding resource requirement, additional instances may be created using the next-lowest cost configuration, and so forth until the resource requirement has been satisfied.

For example, assuming a listing of selectable configurations A, C, and D, assume that configuration A has the lowest price, followed by configuration C, with configuration D having the highest price. Further assume that the request 110 includes an on-demand resource requirement of one thousand on-demand instances 112, with configuration A having an available capacity of eight hundred on-demand instances 112. The fleet manager 104 may then determine that the cloud fleet 106 should include eight hundred on-demand instances 112 of configuration A and two hundred on-demand instances 112 of configuration C.

In some embodiments, the allocation strategy includes a price-capacity-optimized allocation strategy. A price-capacity optimized allocation strategy is similar to a capacity-optimized allocation strategy as described above, using price as a factor for selecting a particular configuration where multiple configurations have the same or similar available capacity. For example, where two configurations have the same, highest available capacity of the selectable configurations, the configuration having the lowest price will be used for creating the corresponding instances. The price-capacity-optimized allocation strategy may therefore use capacity as a primary factor and price as a secondary factor for selecting a particular configuration.

In some embodiments, the allocation strategy includes a priority ranking allocation strategy. Under a priority ranking allocation strategy, each of the selectable configurations is assigned a ranking. The highest ranked configuration may be preferentially selected. Should there not be enough available capacity for the highest ranked configuration to satisfy the corresponding resource requirement, the next highest ranked configuration may be used, and so forth, until the resource requirement has been satisfied, similar to the price-optimized allocation strategy as described above. In some embodiments, on-demand instances 112 and spot instances 114 may each be ranked and allocated separately for satisfying their respective resource requirements.

In some embodiments, these rankings are specified in the request 110. For example, in some embodiments, the request 110 may include an ordered, ranked listing of selectable configurations. In some embodiments, these rankings are dynamically calculated or determined based on various factors, including price, available capacity, and the like. In some embodiments, the ranking of a given configuration is based on whether the associated account for which the cloud fleet 106 is created has a reserved instance on the given configuration. A reserved instance is a contracted reservation of capacity for an instance of the corresponding configuration for some amount of time (e.g., several years), which may come with a considerable price discount compared to non-reserved instances of that configuration. Accordingly, selectable configurations having a reserved instance may be assigned a higher ranking compared to other configurations up to the number of reserved instances. In other words, reserved instance configurations may be preferentially selected under a priority ranking allocation strategy.

Readers will appreciate that these allocation strategies are merely exemplary and that other allocation strategies are also contemplated within the scope of the present disclosure. Moreover, readers will appreciate that, in some embodiments, certain allocation strategies may only be used for certain types of cloud computing instances. For example, a price-optimized allocation strategy and a priority ranking allocation strategy may only be selectable for on-demand instances 112. As another example, a capacity-optimized allocation strategy and a price-capacity-optimized allocation strategy may only be selectable for spot instances 114.

The fleet manager 104 therefore determines, using the allocation strategy and the listing of selectable configurations, the particular configurations and the number of cloud computing instances (e.g., on-demand instances 112 and spot instances 114) for those configurations. In some embodiments, additional restrictions are used by the fleet manager 104 to make these determinations. In some embodiments, these restrictions are defined with respect to an account associated with the cloud fleet 106 (e.g., as a preference or selectable parameter). In some embodiments, these restrictions are defined with respect to a subscription or service tier for this account.

In some embodiments, the fleet manager 104 applies one or more configuration restrictions. A configuration restriction prevents certain configurations from being used in a cloud fleet 106 or in particular zones of a cloud fleet 106. For example, an account subscription can include a configuration restriction that certain configurations may not be used at all. As another example, an account subscription can include a configuration restriction that certain configurations may not be used in certain availability zones.

In some embodiments, the fleet manager 104 can apply one or more vCPU quotas. A vCPU quota is the maximum number of vCPUs that may be used for instances (e.g., on-demand instances 112) of a particular grouping or family of configurations. The vCPU quota may be defined with respect to an account associated with the cloud fleet 106, the cloud fleet 106 itself, or another entity. For example, assuming a vCPU quota of one hundred for configuration family X, the total number of vCPUs for on-demand instances 112 in configuration family X should not exceed one hundred. In some embodiments, a vCPU quota can also include the maximum number of vCPUs that are used for spot instances 114 across any configuration. The use of these additional restrictions by the fleet manager 104 can prevent errors, such as allocation failures, when ultimately generating the cloud fleet 106. For example, this may prevent the fleet manager 104 from attempting to create an instance having a configuration that is not allowed for the subscription level of the account associated with the cloud fleet 106.

In some embodiments, rather than including a listing of selectable cloud computing instance configurations, the request 110 instead includes a listing of attributes that should be satisfied by the on-demand instances 112 and/or spot instances 114. Such attributes may include, for example, memory-to-vCPU ratios, numbers of vCPUs, storage space, network bandwidth, and the like. In other words, these attributes may correspond to the different attributes of configurations described above. The fleet manager 104 may then select configurations for use in the cloud fleet 106 from a set of configurations satisfying the listing of attributes rather than an enumerated listing of configurations. Accordingly, approaches set forth herein using a listing of configurations in a request 110 may also be applied to a set of configurations satisfying a listing of attributes included in a request 110.

The fleet manager 104 then generates the cloud fleet 106 to include the determined number of instances for the determined configurations. Readers will appreciate that the approaches set forth above provide several advantages for generating cloud fleets 106. For example, the fleet manager 104 allows for cloud computing instances of differing configurations to be created and included in a newly generated cloud fleet 106 (e.g., a configuration split) based on their available capacities. As another example, in contrast to existing implementations that rely on different systems for managing on-demand instances 112 and spot instances 114, the fleet manager 104 allows for creation of both on-demand instances 112 and spot instances 114 using the same interface, and potentially the same request 110. As a further example, the fleet manager 104 allows for various allocation strategies, including a price-capacity-optimized allocation strategy, to be used in creating instances.

In some embodiments, the fleet manager 104 also performs various tasks after the cloud fleet 106 has been created and is executing to improve the overall functionality of the cloud fleet 106 and the user experience. For example, as was set forth above, spot instances 114 may be automatically evicted (e.g., deleted) based on the current available capacity of the cloud computing environment 102, such as the amount of available capacity for the configuration of the spot instance 114 to be evicted. Accordingly, in some embodiments, the fleet manager 104 can detect an eviction signal for a spot instance 114. An eviction signal is an event indicating that a spot instance 114 has or will be evicted. For example, the eviction signal can include an event indicating that a spot instance 114 has been evicted. As another example, the eviction signal can include an event indicating that a spot instance 114 will likely be evicted in the future. This may include various metrics related to the spot instance 114, such as a current or projected capacity for the configuration of the spot instance 114, a historic eviction rate for the configuration of the spot instance 114, and the like.

Accordingly, in response to detecting the eviction signal, the fleet manager 104 may create another spot instance 114 for the cloud fleet 106 having a different configuration, thereby using a different pool of capacity, than the spot instance 114 subject to the eviction signal. For example, the fleet manager 104 may create another spot instance 114 having a different configuration but the same number of cores, or sharing other attributes, than the spot instance 114 subject to the eviction signal. This allows for the cloud fleet 106 to maintain the capacity set forth in its resource requirements when the spot instance 114 is evicted. Readers will appreciate that this may be done in response to the spot instance 114 being evicted or, in some embodiments, before the spot instance 114 is evicted so as to minimize the amount of time that the cloud fleet 106 is at reduced capacity.

As was also set forth above, in some embodiments, a user can delete on-demand instances 112 using some command or request (e.g., to the fleet manager 104). Accordingly, in some embodiments, the fleet manager 104 can automatically update the resource allocation based on a user-initiated deletion of an on-demand instance 112. For example, assume that the cloud fleet 106 was created with an on-demand resource requirement of one thousand on-demand instances 112. As the cloud fleet 106 operates the cloud computing environment 102 may scale and maintain the cloud fleet 106 to ensure that this on-demand instance 112 resource requirement is satisfied over time. Further assume that a user chooses to delete an on-demand instance 112. In response, the fleet manager 104 may update the resource requirement, reducing it to nine hundred and ninety-nine on-demand instances 112. Thus, rather than maintaining the previous on-demand resource requirement of one thousand instances, the cloud computing environment 102 will instead work to maintain the reduced on-demand resource requirement of nine hundred and ninety-nine on-demand instances 112.

In some embodiments, an attribute in the listing of attributes is expressed as a specific value such that a configuration will satisfy the listing of attributes where its corresponding attribute equals the specific value in the request 110. For example, where the listing of attributes includes four vCPU cores, only those configurations having exactly four vCPU cores will satisfy the listing of attributes. In some embodiments, an attribute is expressed as a minimum or maximum threshold value such that a configuration will satisfy the listing of attributes where its corresponding attribute equals, falls above, or below the threshold value. In some embodiments, an attribute is expressed as a range of values such that a configuration will satisfy the listing of attributes where its corresponding attribute falls within the range of values. In some embodiments, where the listing of attributes includes many attributes, a configuration may satisfy the listing of attributes where it satisfies each of the attributes included in the listing.

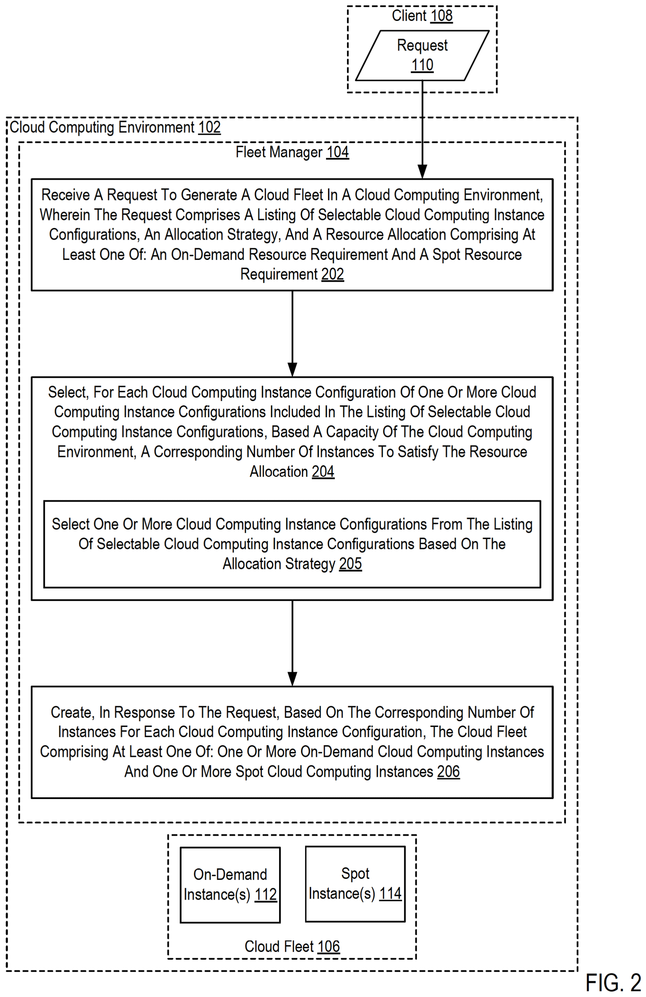

For further explanation, Fig. 2 sets forth a flowchart of an example method of automated deployment and maintenance of a cloud fleet in accordance with some embodiments of the present disclosure. The method of Fig. 2 may be performed, for example, by a fleet manager 104 of a cloud computing environment 102 as described in Fig. 1. The method of Fig. 2 includes receiving 202 a request 110 to generate a cloud fleet 106 in a cloud computing environment 102, wherein the request 110 comprises a listing of selectable cloud computing instance configurations, an allocation strategy, and a resource allocation comprising at least one of: an on-demand resource requirement and a spot resource requirement. In some embodiments, the fleet manager 104 receives 202 the request 110 from a client 108 via an interface exposed by the fleet manager 104. For example, the fleet manager 104 can receive 202 the request 110 via an exposed API or other interface as can be appreciated. Accordingly, in some embodiments, the request 110 includes an API call or other interface call.

In some embodiments, the request 110 includes a request 110 to create a cloud fleet 106 in the cloud computing environment 102 for with a particular account of a cloud service provider. For example, the fleet manager 104 can receive 202 the request 110 from a client 108 associated with a user of this account. As is set forth above, the request 110 includes various parameters used by the fleet manager 104 in creating the cloud fleet 106. Particularly, the request includes parameters used by the fleet manager 104 to determine the particular cloud computing instance configurations (e.g., "configurations") offered by the cloud service provider for use in the cloud fleet 106, as well as a number of instances for these determined configurations. Readers will appreciate that the particular parameters described as being included in the request 110 are merely exemplary and that, in some embodiments, other parameters are included in addition to or instead of any of these parameters.

In some embodiments, these parameters include a listing of selectable cloud computing instance configurations. The fleet manager 104 may determine the particular configurations of cloud computing instances to be included in the cloud fleet 106 from this listing. As such, this listing may serve to narrow the scope from which the fleet manager 104 may select the configurations of instances for inclusion in the cloud fleet 106. Although the discussions set forth herein refer to a listing of selectable cloud computing instance configurations, in some embodiments, the request 110 may instead include a listing of cloud computing configuration attributes. Accordingly, the approaches set forth in Fig. 2 and the subsequent flowcharts discussing a listing of selectable cloud computing configurations may also be applied to a set of cloud computing configurations matching this list of attributes included in the request 110.

In some embodiments, the request 110 includes an allocation strategy. The allocation strategy defines the particular approaches used by the fleet manager 104 in selecting the particular configurations of cloud computing instances to include in the cloud fleet 106 as well as how many instances of each configuration should be created. The request 110 can indicate, for example, a selection of one of many predefined or predetermined allocation strategies. These allocation strategies may include a price-optimized allocation strategy, a capacity-optimized allocation strategy, a price-capacity-optimized allocation strategy, a priority ranking allocation strategy, or another allocation strategy as can be appreciated. In some embodiments, the request 110 indicates different allocation strategies to be used for on-demand instances 112 and spot instances 114. Alternatively, the request 110 may indicate a single allocation strategy to be used for both on-demand instances 112 and spot instances 114. In some embodiments, the request 110 can omit an indication of a particular allocation strategy for on-demand instances 112 and/or spot instances 114. Accordingly, in some embodiments, a default allocation strategy is used for on-demand instances 112 and/or spot instances 114 in absence of an explicitly indicated allocation strategy in the request 110.

In some embodiments, the request 110 includes a resource allocation that defines an amount of computational resources to be allocated to on-demand instances 112 and/or spot instances 114 in the cloud fleet 106. For example, the resource allocation may include as an on-demand resource requirement, an amount of computational resources required for on-demand instances 112 in the cloud fleet 106. As another example, the resource allocation may include as a spot resource requirement, an amount of computational resource required for spot instances 114 in the cloud fleet 106. In some embodiments, the on-demand resource requirement and/or spot instance requirement are used to define both an amount of computational resource to be allocated to on-demand instances 112 and/or spot instances 114 on creation of the cloud fleet 106, but may also be used as thresholds for amounts of computational resources to remain allocated (e.g., maintained) during execution of the cloud fleet 106.

In some embodiments, the amount of computational resources in the on-demand resource requirement and/or spot resource requirement can include an amount of cores (e.g., an amount of vCPU cores) to be allocated to on-demand instances 112 and/or spot instances 114. For example, an on-demand resource requirement can indicate that one thousand vCPU cores should be allocated for on-demand instances 112 while a spot resource requirement can indicate that one hundred vCPU cores should be allocated for spot instances 114. In some embodiments, the amount of computational resources in the on-demand resource requirement and/or spot resource requirement includes a number of on-demand instances 112 and/or spot instances 114 to be included in the cloud fleet 106. As another example, an on-demand resource requirement can indicate that the cloud fleet 106 should include two hundred on-demand instances 112 while a spot resource requirement can indicate that the cloud fleet 106 should include ten spot instances 114.

The method of Fig. 2 also includes selecting 204, for each cloud computing instance configuration of one or more cloud computing instance configurations included in the listing of selectable cloud computing instance configurations, based a capacity of the cloud computing environment 102, a corresponding number of instances to satisfy the resource allocation. In some embodiments, the fleet manager determines, for a particular type of instance (e.g., on-demand instances 112 or spot instances 114), one or more configurations to be used for that type of instance. Accordingly, in some embodiments, selecting, selecting 204, for each cloud computing instance configuration of one or more cloud computing instance configurations included in the listing of selectable cloud computing instance configurations, based a capacity of the cloud computing environment 102, a corresponding number of instances to satisfy the resource allocation also includes: selecting 205 one or more cloud computing instance configurations from the listing of selectable cloud computing instance configurations based on the allocation strategy. The fleet manager 104 may then determine the particular number of instances of the determined configurations to satisfy the corresponding portion of the resource requirement (e.g., the on-demand resource requirement or spot resource requirement).

In some embodiments, where a particular configuration has enough available capacity to support a particular portion of the resource requirement, the fleet manager 104 can select that particular configuration based on the allocation strategy and then determine a number of instances required to satisfy that portion of the resource requirement. As an example, assume that a price-optimized allocation strategy is to be used for on-demand instances 112, with an on-demand resource requirement of five hundred instances. In this example, assuming a lowest-price configuration A for on-demand instances 112 and enough available capacity, the fleet manager 104 may determine that the cloud fleet 106 should include five hundred on-demand instances 112 of configuration A.

In some embodiments, where a particular configuration does not have enough available capacity to support a particular portion of the resource requirement alone, the fleet manager 104 may select multiple configurations and numbers of corresponding instances to satisfy the corresponding portion of the resource requirement. Returning to the example above, instead assume that configuration A only has enough available capacity for four-hundred on-demand instances 112. Further assume that configuration B has a next-lowest price compared to configuration A. Accordingly, the fleet manager 104 may determine that the cloud fleet 106 should include four hundred on-demand instances 112 of configuration A and one hundred on-demand instances 112 of configuration B.

The method of Fig. 2 also includes creating 206, in response to the request 110, based on the corresponding number of instances for each cloud computing instance configuration, the cloud fleet comprising at least one of: one or more on-demand cloud computing instances (e.g., on-demand instances 112) and one or more spot cloud computing instances (e.g., spot instances 114). The fleet manager 104 may therefore use pools of available capacity for the determined configurations to create or instantiate the determined number of instances. Readers will appreciate that this may be in contrast to other implementations relying on pools of already created, warm cloud computing instances, as well as in contrast to other implementations where the particular configurations and numbers of instances of each configuration must be explicitly defined in the received request 110.

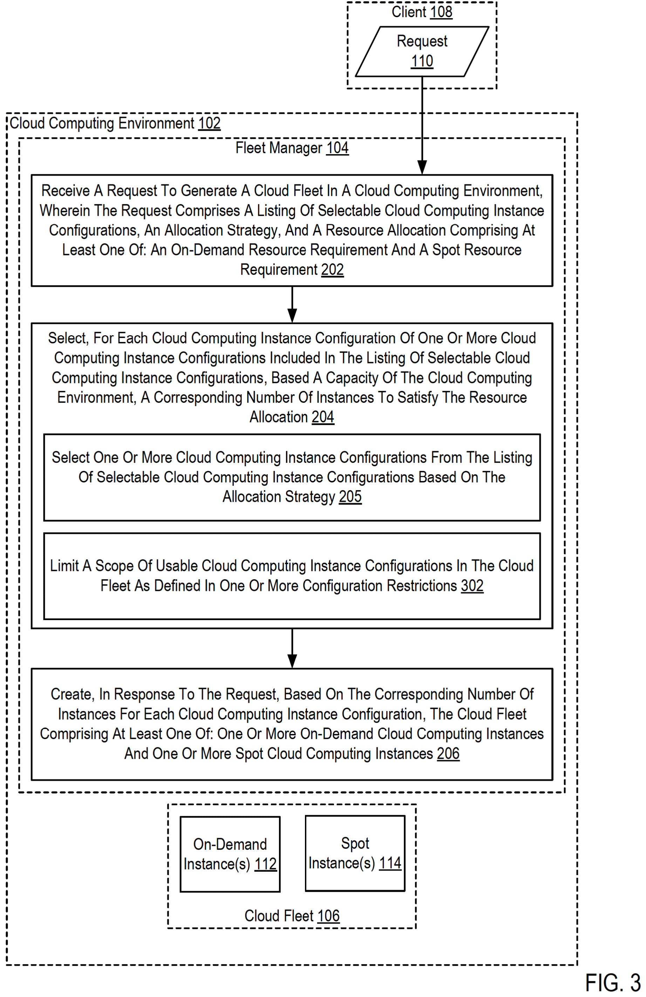

For further explanation, Fig. 3 sets forth a flowchart of another example method of automated deployment and maintenance of a cloud fleet in accordance with some embodiments of the present disclosure. In the method of Fig. 3, selecting 204 a corresponding number of instances to satisfy the resource allocation also includes limiting 304 a scope of usable cloud computing instance configurations in the cloud fleet 104 as defined in one or more configuration restrictions. A configuration restriction further limits the scope of cloud computing instance configurations usable by the fleet manager 104 in creating the particular cloud fleet 106. For example, in some embodiments, the configuration restrictions are defined with respect to a particular account associated with the cloud fleet 106 as a user-defined or configurable account parameter. As another example, in some embodiments, the configuration restrictions are defined with respect to particular subscriptions, service tiers, and the like associated with this account. Continuing with this example, in some embodiments, the account may have a subscription level that indicates particular configurations that may or may not be used in associated cloud fleets 106.

In some embodiments, the configuration restrictions include zonal restrictions. The zonal restrictions may indicate particular configurations that may or may not be used in particular availability zones. Thus, where a cloud fleet 106 is to be deployed to particular zones, these zonal restrictions may limit the configurations that may be used in these zones. In some embodiments, the configuration restrictions may include generalized configuration restrictions defining specific configurations that may or may not be used in associated cloud fleets 106 in any availability zone.

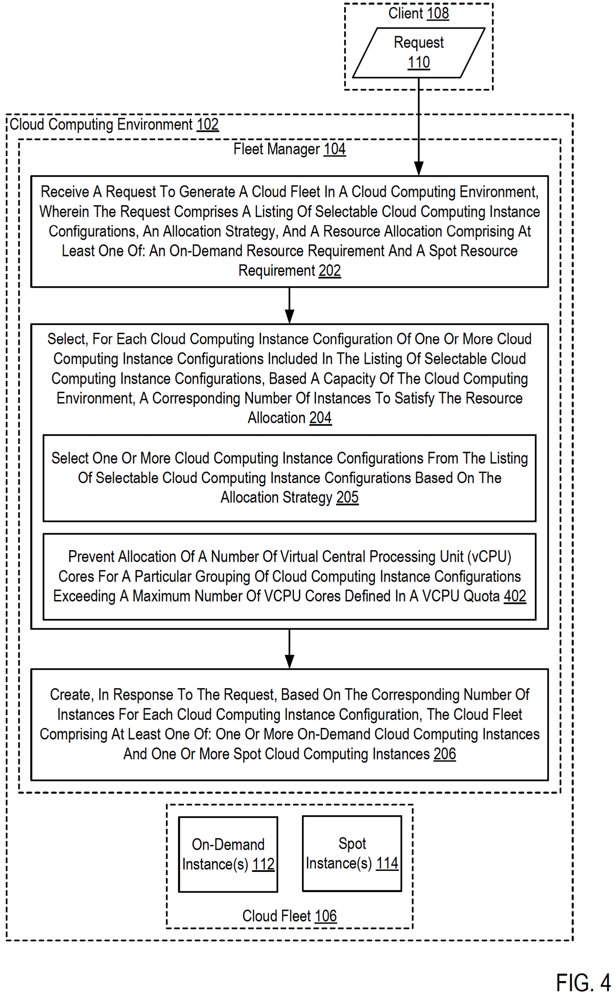

For further explanation, Fig. 4 sets forth a flowchart of another example method of automated deployment and maintenance of a cloud fleet in accordance with some embodiments of the present disclosure. In the method of Fig. 4, selecting 204 a corresponding number of instances to satisfy the resource allocation also includes preventing 402 allocation of a number of virtual central processing unit (vCPU) cores for a particular grouping of cloud computing instance configurations exceeding a maximum number of vCPU cores defined in a vCPU quota. In some embodiments, a vCPU quota is defined with respect to a particular cloud fleet 106 such that the number of vCPU cores of a given configuration grouping in that cloud fleet 106 must not exceed the vCPU quota. In some embodiments, a vCPU quota is defined with respect to a particular account such that the number of vCPU cores of a given configuration grouping across all cloud fleets 106 for that account must not exceed the vCPU quota. For example, assume configuration group X includes configurations A, B, and C while configuration group Y includes configurations D, E, and F. Further assume that configuration group A has a vCPU quota of one hundred and configuration group Y has a vCPU quota of fifty. In this example, the total number of vCPU cores for instances of configurations A, B, and C must not exceed one hundred while the total number of vCPU cores for instances of configurations D, E, and F must not exceed fifty.

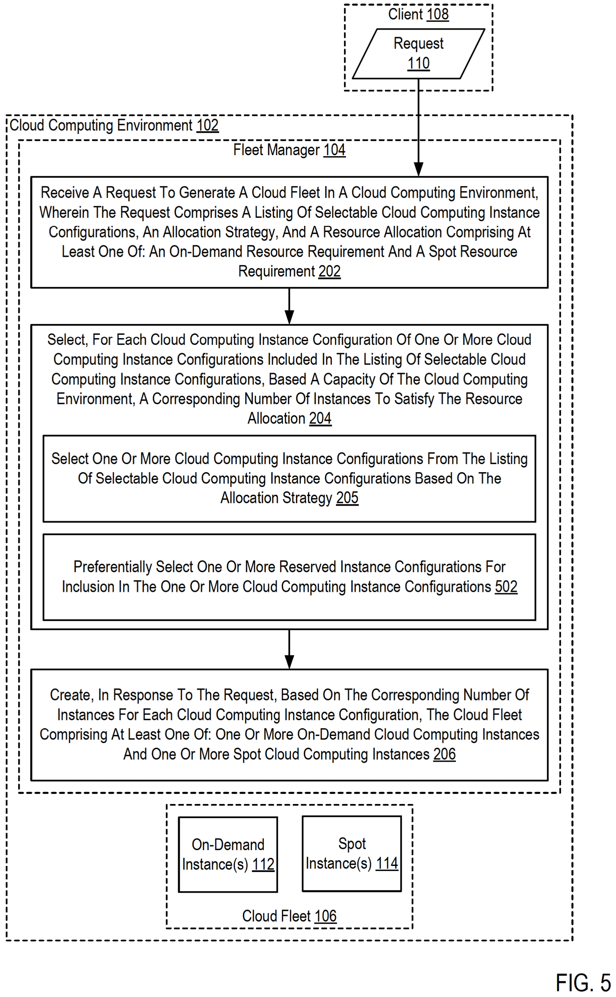

For further explanation, Fig. 5 sets forth a flowchart of another example method of automated deployment and maintenance of a cloud fleet in accordance with some embodiments of the present disclosure. In the method of Fig. 5, selecting 204 a corresponding number of instances to satisfy the resource allocation also includes preferentially selecting 502 one or more reserved instance configurations for inclusion in the one or more cloud computing instance configurations. As is set forth above, in some embodiments, an account of a cloud service provider may hold a reserved instance, a reserved allocation of computational resources for an instance of a particular configuration for some agreed amount of time. This agreement may include a discounted cost of using this reserved instance.

Accordingly, preferentially selecting 502 one or more reserved instance configurations may include preferentially selecting the configurations for available reserved instances when determining the particular configurations to use in the cloud fleet 106. In some embodiments, this can include assigning a higher ranking to reserved instance configurations when using a priority ranking allocation strategy. In some embodiments, this can include preferentially selecting 502 reserved instance configurations when using a price-optimized allocation strategy by virtue of the reduced cost associated with reserved instance configurations.

Readers will appreciate that, in some embodiments, an account may only hold a particular number of reserved instances for a particular reserved instance configuration. Accordingly, in some embodiments, preferentially selecting 502 the one or more reserved instance configurations can include preferentially selecting 502 the reserved instance configurations for up to a number of reserved instances. For example, assume a price-optimized allocation strategy for on-demand instances 112 with an overall lowest-price configuration A. Further assume that an account holds five reserved instances for configuration X. These reserved instances may have a lower usage price than configuration A, while non-reserved instances of configuration X may have a higher usage price than configuration A. To allocate one hundred on-demand instances 112, this price-optimized allocations strategy may dictate the use of five on-demand instances 112 of configuration X and ninety-five on-demand instances of configuration A.

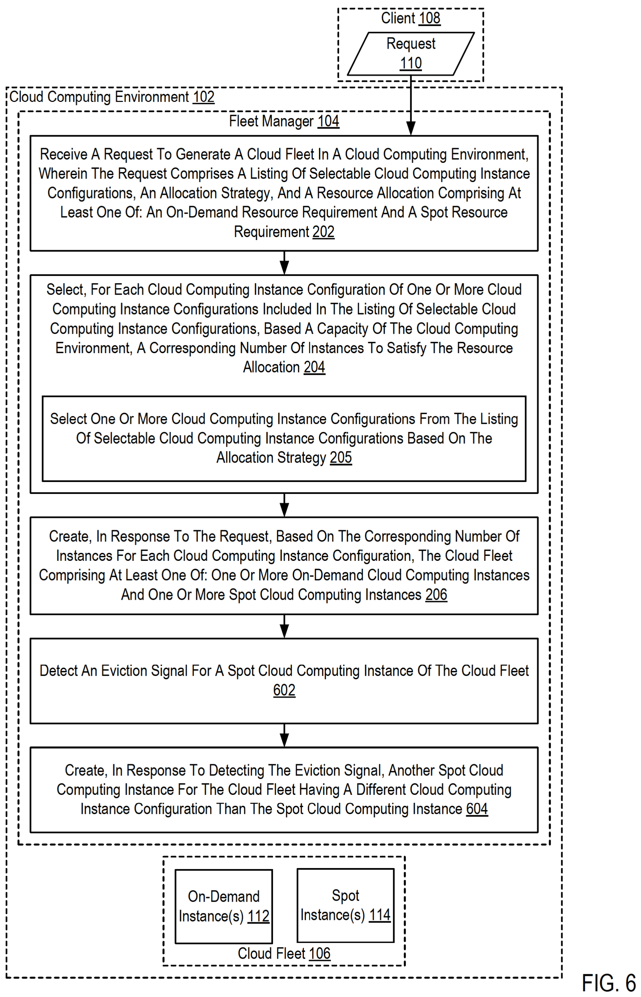

For further explanation, Fig. 6 sets forth a flowchart of another example method of automated deployment and maintenance of a cloud fleet in accordance with some embodiments of the present disclosure. The method of Fig. 6 includes detecting 602 an eviction signal for a spot cloud computing instance (e.g., a spot instance 114) of the cloud fleet 106. An eviction signal is an event indicating that a spot instance 114 has been or will be evicted from the cloud fleet 106. For example, a spot instance 114 may be evicted due to a current or predicted available capacity for the configuration of the spot instance 114. Accordingly, in some embodiments, detecting 602 an eviction signal includes detecting that the spot instance 114 has been evicted. In some embodiments, detecting 602 an eviction signal includes detecting particular conditions (e.g., related to the capacity for the configuration of the spot instance 114) that indicate an impending eviction of the spot instance 114.

The method of Fig. 6 also includes creating 604, in response to detecting the eviction signal, another spot cloud computing instance (e.g., another spot instance 114) for the cloud fleet 106 having a different cloud computing instance configuration than the spot cloud computing instance. As the spot instance 114 has been or will be evicted due to reduced capacity for that configuration, another spot instance 114 may be created 604 using a different configuration, thereby drawing from a different pool of available capacity. In some embodiments, the configuration of the other spot instance 114 may be selected so as to satisfy a spot resource requirement or other metric. For example, where the spot instance 114 subject to eviction has four vCPU cores, the other spot instance 114 may be created 604 using another configuration that has four vCPU cores so as to maintain the overall vCPU capacity used by spot instances 114 in the cloud fleet 106.

Readers will appreciate that this allows for the cloud fleet 106 to maintain the overall capacity used by spot instances 114 should a spot instance 114 be evicted. Moreover, as the other spot instance 114 may be created before the spot instance 114 is evicted, the cloud fleet 106 may more quickly transition to using this newly created 604 spot instance, reducing the amount of time that the cloud fleet 106 is operating at a temporarily reduced capacity.

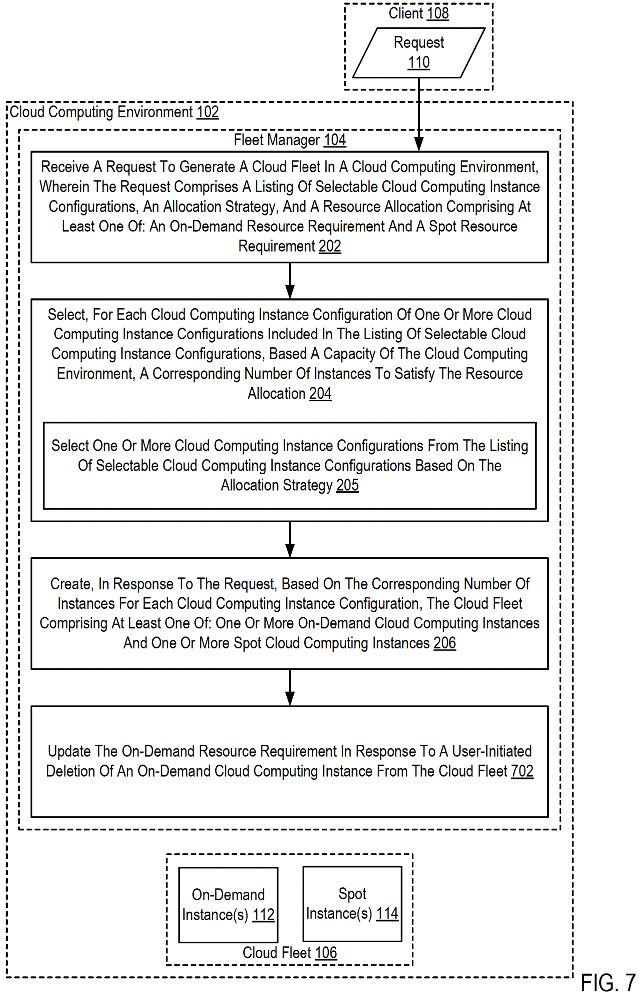

For further explanation, Fig. 7 sets forth a flowchart of another example method of automated deployment and maintenance of a cloud fleet in accordance with some embodiments of the present disclosure. The method of Fig. 7 includes updating 702 the on-demand resource requirement in response to a user-initiated deletion of an on-demand cloud computing instance from the cloud fleet 106. As is set forth above, in some embodiments, on-demand instances 112 are deleted from a cloud fleet 106 only in response to a user-initiated deletion, in contrast to spot instances 114 that are deleted due to changes in capacity. Moreover, the fleet manager 104 or other components of the cloud computing environment 102 may maintain the resources allocated to the cloud fleet 106 so as to satisfy the resource allocation of the request 110 (e.g., the on-demand resource requirement and the spot resource requirement).

In response to a user-initiated deletion of an on-demand instance 112, the on-demand resource requirement may be reduced to reflect this deletion. For example, where an on-demand instance 112 is deleted from one thousand on-demand instances 112, the on-demand resource requirement may be reduced from one thousand to nine hundred and ninety-nine on-demand instances 112. Accordingly, the cloud computing environment 102 will instead maintain the resources allocated to the cloud fleet 106 so as to satisfy this reduced resource allocation.

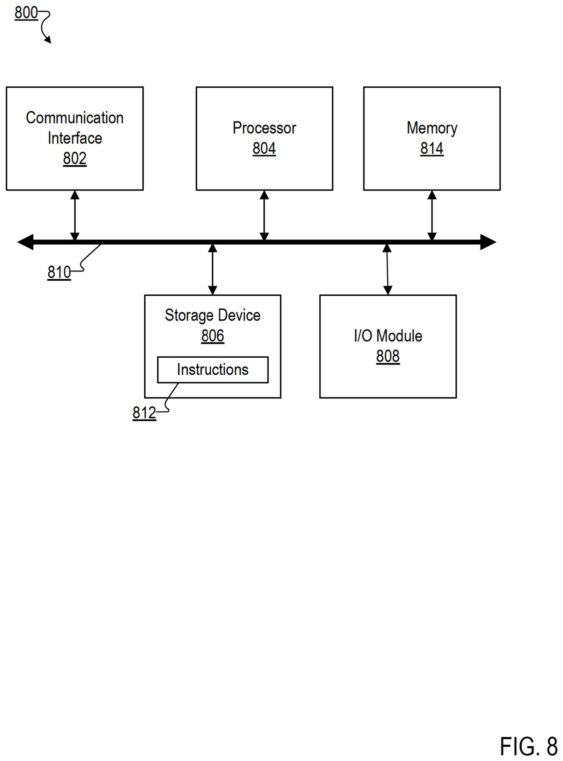

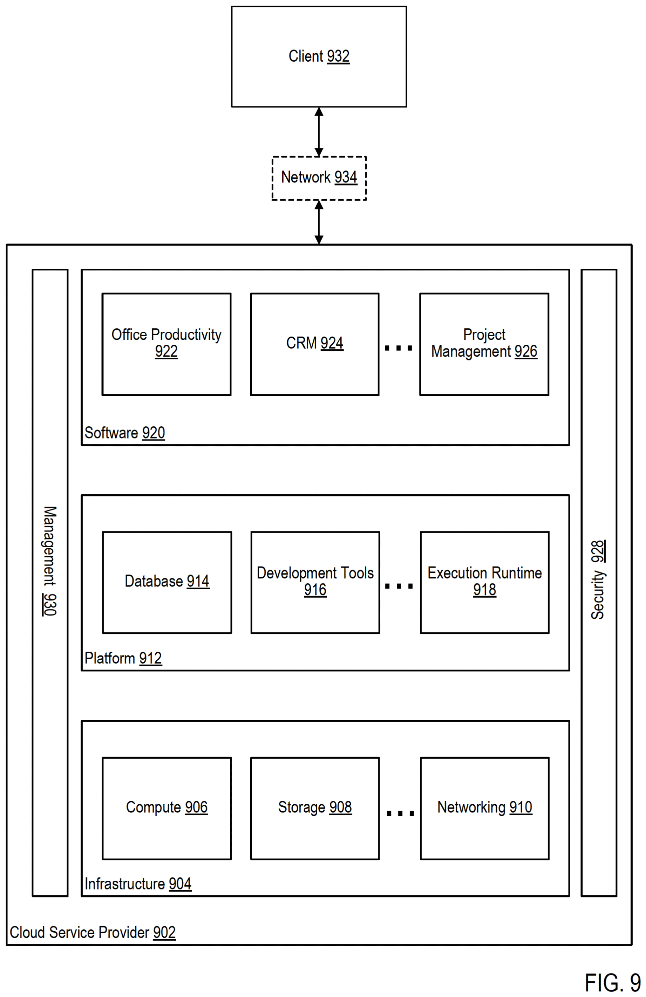

For further explanation, the sections included below provide some details regarding technologies that may be used to support automated deployment and maintenance of a cloud fleet in accordance with some embodiments. For example, Fig. 8 sets forth an example of a computing device that may be used for some portion of automated deployment and maintenance of a cloud fleet in accordance with some embodiments. As an additional example of technologies that may be used to support automated deployment and maintenance of a cloud fleet, Fig. 9 sets forth a block diagram of a cloud service provider 902 service architecture in accordance with some embodiments of the present disclosure.

For further explanation, Fig. 8 illustrates an exemplary computing device 800 that may be specifically configured to perform one or more of the processes described herein. As shown in Fig. 8, computing device 800 may include a communication interface 802, a processor 804, a storage device 806, an input/output (I/O) module 808, and computer memory 814 communicatively connected one to another via a communication infrastructure 810. While an exemplary computing device 800 is shown in Fig. 8, the components illustrated in Fig. 8 are not intended to be limiting. Additional or alternative components may be used in other embodiments. Components of computing device 800 shown in Fig. 8 will now be described in additional detail.

Communication interface 802 may be configured to communicate with one or more computing devices. Examples of communication interface 802 include, without limitation, a wired network interface (such as a network interface card), a wireless network interface (such as a wireless network interface card), a modem, an audio/video connection, and any other suitable interface.

Processor 804 generally represents any type or form of processing unit capable of processing data and/or interpreting, executing, and/or directing execution of one or more of the instructions, processes, and/or operations described herein. Processor 804 may perform operations by executing computer-executable instructions 812 (e.g., an application, software, code, and/or other executable data instance) stored in storage device 806.

Storage device 806 may include one or more data storage media, devices, or configurations and may employ any type, form, and combination of data storage media and/or device. For example, storage device 806 may include, but is not limited to, any combination of non-volatile media and/or volatile media. Electronic data, including data described herein, may be temporarily and/or permanently stored in storage device 806. For example, data representative of computer-executable instructions 812 configured to direct processor 804 to perform any of the operations described herein may be stored within storage device 806. In some examples, data may be arranged in one or more databases residing within storage device 806.

I/O module 808 may include one or more I/O modules configured to receive user input and provide user output. I/O module 808 may include any hardware, firmware, software, or combination thereof supportive of input and output capabilities. For example, I/O module 808 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 808 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 808 is configured to provide graphical data to a display for presentation to a user. The graphical data may be representative of one or more graphical user interfaces and/or any other graphical content as may serve a particular implementation. In some examples, any of the systems, computing devices, and/or other components described herein may be implemented by computing device 800.

For further explanation and as an additional example of a supporting technology for automated deployment and maintenance of a cloud fleet, Fig. 9 sets forth a block diagram of a cloud service provider service architecture in accordance with some embodiments. The cloud service provider 902 can deliver a variety of resources through a services-based consumption model where resources are consumed on-demand and as-a-service. Cloud service providers can provide services via cloud platforms such as, for example, Microsoft Azure^{™}, Amazon Web Services ('AWS')^{™}, Google Cloud Platform ('GCP')^{™}, and others. In Fig. 9, the cloud service provider 902 is accessed from a client device 934 via a network 932.

Fig. 9 depicts an embodiment where software 920 is delivered as a service. Software-as-a-service ('SaaS') is a model where software applications are delivered over the internet as-a-service. Rather than installing and maintaining software locally, users can access software via a web browser or other network connected interface, eliminating the need for complex software and hardware management on the client-side. In Fig. 9, as examples of software 920 that can be delivered as-a-service, the illustrated embodiment includes office productivity 922 software, customer relationship management ('CRM') 924 software, and project management 926 software. The office productivity 922 software can include applications designed to facilitate common business and personal tasks, including word processing applications, applications for spreadsheet creation, presentation design applications, and many others. The CRM 924 software can include applications for managing a business organization's relationships and interactions with customers and potential customers. The project management 926 software can include applications designed to help teams plan, organize, and manage projects efficiently by facilitating collaboration and tracking the progress of projects. Readers will appreciate that in other embodiments, other types of software may be delivered using a SaaS model.

Fig. 9 depicts an embodiment where platforms 912 can be delivered as a service. Platform-as-a-service ('PaaS') is a model that provides cloud customers with platform resources that they can use to develop, run, and manage applications without the complexity of such deploying and managing such infrastructure on their own. In Fig. 9, as examples of platform 912 resources that can be delivered as-a-service, the illustrated embodiment includes database 914 services, development tools 916 services, and execution runtime 918 services. The database 914 services can be used to provide access to databases without management overhead for the user as the cloud service provider manages the provisioning, scaling, and maintenance of the databases. The development tools 916 services can provide developers with tools to design, develop, test, and deploy applications without needing to manage the underlying infrastructure. The execution runtime 918 services can provide environments where applications or other forms of computer program code can be executed, including services to scale the execution environment. Readers will appreciate that in other embodiments, other platform resources may be delivered using a PaaS model.

Fig. 9 depicts an embodiment where infrastructure 904 can be delivered as a service. Infrastructure-as-a-Service ('IaaS') is a model that provides virtualized computing resources over the internet, such that infrastructure such as servers, storage, networks, and others may be leased on demand rather than purchasing and maintaining physical hardware. In Fig. 9, as examples of infrastructure 904 resources that can be delivered as-a-service, the illustrated embodiment includes compute 906 services, storage 908 services, and networking 910 services. The compute 906 services can be used to provide on-demand access to computational resources such as VMs, containers, and serverless functions, where the cloud service provider manages the provisioning, scaling, and maintenance of such resources. The storage 908 services can provide storage resources that can be used to store and access data, without the need for customers to purchase and manage on-premises physical storage resources. The networking 910 services can provide the ability to create and manage virtualized networking resources such as, for example, virtual private networks ('VPNs'), firewalls, load balancers, and more. Readers will appreciate that in other embodiments, other infrastructure resources may be delivered using a PaaS model.

The cloud service provider of Fig. 9 also provides management 930 resources. The management 930 resources can include, for example, tools and interfaces that enable customers to efficiently deploy, monitor, and manage, their cloud services. Such tools can include web-based management consoles, command-line interfaces ('CLls'), APIs, automation tools, and other tools.

The cloud service provider of Fig. 9 also provides security 928 resources. The security 928 resources can include, for example, tools and services to help customers protect their cloud environments and ensure compliance with security standards. These tools and services may provide specific aspects of security, including identity and access management, network security, threat detection, compliance management, and others.

Readers will appreciate that many of the components described above may be delivered as services from a cloud service provider. For example, the virtual machines, containers, and pods described above may all be delivered via a cloud service provider. In other embodiments, other forms of compute resources may be used in place of the virtual machines or other compute resource. For example, AWS EC2 instances or other form of cloud compute instances may be utilized in place of the virtual machines.

Advantages and features of the present disclosure can be further described by the following statements:
1. A method of automated deployment and maintenance of a cloud fleet, comprising: receiving a request to generate a cloud fleet in a cloud computing environment, wherein the request comprises a listing of selectable cloud computing instance configurations, an allocation strategy, and a resource allocation comprising at least one of: an on-demand resource requirement and a spot resource requirement; selecting, for each cloud computing instance configuration of one or more cloud computing instance configurations included in the listing of selectable cloud computing instance configurations, based a capacity of the cloud computing environment, a corresponding number of instances to satisfy the resource allocation, including selecting one or more cloud computing instance configurations from the listing of selectable cloud computing instance configurations based on the allocation strategy; and creating based on the corresponding number of instances for each cloud computing instance configuration, the cloud fleet comprising at least one of: one or more on-demand cloud computing instances and one or more spot cloud computing instances.
2. The method of statement 1, wherein the allocation strategy comprises capacity as a primary factor and financial cost as a secondary factor.
3. The method of statements 1 or 2, wherein selecting, for each cloud computing instance configuration of the one or more cloud computing instance configurations, the corresponding number of instances comprises limiting a scope of usable cloud computing instance configurations in the cloud fleet as defined in one or more configuration restrictions.
4. The method of any combination of one or more of statements 1-3, wherein selecting, for each cloud computing instance configuration of the one or more cloud computing instance configurations, the corresponding number of instances comprises preventing allocation of a number of virtual central processing unit (vCPU) cores for a particular grouping of cloud computing instance configurations exceeding a maximum number of vCPU cores defined in a vCPU quota.
5. The method of any combination of one or more of statements 1-4, wherein selecting, for each cloud computing instance configuration of the one or more cloud computing instance configurations, the corresponding number of instances comprises preferentially selecting one or more reserved instance configurations for inclusion in the one or more cloud computing instance configurations.
6. The method of any combination of one or more of statements 1-5, wherein the method further comprises: detecting an eviction signal for a spot cloud computing instance of the cloud fleet; and creating, in response to detecting the eviction signal, an other spot cloud computing instance for the cloud fleet having a different cloud computing instance configuration than the spot cloud computing instance.
7. The method of any combination of one or more of statements 1-6, wherein the eviction signal comprises a signal indicating an impending eviction of the spot cloud computing instance, and wherein the other spot cloud computing instance is created before the spot cloud computing instance is evicted.
8. The method of any combination of one or more of statements 1-7, further comprising updating the on-demand resource requirement in response to a user-initiated deletion of an on-demand cloud computing instance from the cloud fleet.
9. An apparatus for automated deployment and maintenance of a cloud fleet, comprising: a memory; and one or more processing devices, operatively coupled to the memory, the one or more processing devices configured to: receive a request to generate a cloud fleet in a cloud computing environment, wherein the request comprises a listing of selectable cloud computing instance configurations, an allocation strategy, and a resource allocation comprising at least one of: an on-demand resource requirement and a spot resource requirement; select, for each cloud computing instance configuration of one or more cloud computing instance configurations included in the listing of selectable cloud computing instance configurations, based a capacity of the cloud computing environment, a corresponding number of instances to satisfy the resource allocation, wherein, to select, for each cloud computing instance configuration of the one or more cloud computing instance configurations, the corresponding number of instances to satisfy the resource allocation, the one or more processing devices are further configured to: select one or more cloud computing instance configurations from the listing of selectable cloud computing instance configurations based on the allocation strategy; and create based on the corresponding number of instances for each cloud computing instance configuration, the cloud fleet comprising at least one of: one or more on-demand cloud computing instances and one or more spot cloud computing instances.
10. The apparatus of statement 9, wherein the allocation strategy comprises capacity as a primary factor and financial cost as a secondary factor.
11. The apparatus of statements 9 or 10, wherein, to select, for each cloud computing instance configuration of the one or more cloud computing instance configurations, the corresponding number of instances, the processing device is configured to limit a scope of usable cloud computing instance configurations in the cloud fleet as defined in one or more configuration restrictions.
12. The apparatus of any combination of one or more of statements 9-11, wherein, to select, for each cloud computing instance configuration of the one or more cloud computing instance configurations, the corresponding number of instances, the processing device is configured to prevent allocation of a number of virtual central processing unit (vCPU) cores for a particular grouping of cloud computing instance configurations exceeding a maximum number of vCPU cores defined in a vCPU quota.
13. The apparatus of any combination of one or more of statements 9-12, wherein, to select, for each cloud computing instance configuration of the one or more cloud computing instance configurations, the corresponding number of instances, the processing device is configured to preferentially selecting one or more reserved instance configurations for inclusion in the one or more cloud computing instance configurations.
14. The apparatus of any combination of one or more of statements 9-13, wherein the processing device is further configured to: detect an eviction signal for a spot cloud computing instance of the cloud fleet; and create, in response to detecting the eviction signal, an other spot cloud computing instance for the cloud fleet having a different cloud computing instance configuration than the spot cloud computing instance.
15. The apparatus of any combination of one or more of statements 9-14, wherein the eviction signal comprises a signal indicating an impending eviction of the spot cloud computing instance, and wherein the other spot cloud computing instance is created before the spot cloud computing instance is evicted.
16. The apparatus of any combination of one or more of statements 9-15, wherein the processing device is further configured to update the resource allocation in response to a user-initiated deletion of a cloud computing instance from the cloud fleet.
17. A non-transitory computer readable storage medium storing instructions which, when executed, cause a processing device to: receive a request to generate a cloud fleet in a cloud computing environment, wherein the request comprises a listing of selectable cloud computing instance configurations, an allocation strategy, and a resource allocation comprising at least one of: an on-demand resource requirement and a spot resource requirement; select, for each cloud computing instance configuration of one or more cloud computing instance configurations included in the listing of selectable cloud computing instance configurations, based a capacity of the cloud computing environment, a corresponding number of instances to satisfy the resource allocation, wherein, to select, for each cloud computing instance configuration of the one or more cloud computing instance configurations, the corresponding number of instances to satisfy the resource allocation, the instructions, when executed, further cause the processing device to: select one or more cloud computing instance configurations from the listing of selectable cloud computing instance configurations based on the allocation strategy; and create based on the corresponding number of instances for each cloud computing instance configuration, the cloud fleet comprising at least one of: one or more on-demand cloud computing instances and one or more spot cloud computing instances.
18. The non-transitory computer readable storage medium of statement 17, wherein the allocation strategy comprises capacity as a primary factor and cost as a secondary factor.
19. The non-transitory computer readable storage medium of statements 17 or 18, wherein, to select, for each cloud computing instance configuration of the one or more cloud computing instance configurations, the corresponding number of instances, the instructions, when executed, cause the processing device to limit a scope of usable cloud computing instance configurations in the cloud fleet as defined in one or more configuration restrictions.
20. The non-transitory computer readable storage medium of any combination of one or more of statements 17-20, wherein, to select, for each cloud computing instance configuration of the one or more cloud computing instance configurations, the corresponding number of instances, the instructions, when executed, cause the processing device to prevent allocation of a number of virtual central processing unit (vCPU) cores for a particular grouping of cloud computing instance configurations exceeding a maximum number of vCPU cores defined in a vCPU quota.

Although some embodiments are described largely in the context of a system, method, or in some other way, readers will recognize that embodiments of the present disclosure may also take the form of a computer program product disposed upon computer readable storage media for use with any suitable processing system. Such computer readable storage media may be any storage medium for machine-readable information, including magnetic media, optical media, solid-state media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps described herein as embodied in a computer program product. Persons skilled in the art will recognize also that, although some of the embodiments described in this specification are oriented to software installed and executing on computer hardware, nevertheless, alternative embodiments implemented as firmware or as hardware are well within the scope of the present disclosure.

Readers will appreciate that some embodiments are described in which computer program instructions are executed on computer hardware such as, for example, one or more computer processors. Readers will appreciate that in other embodiments, computer program instructions may be executed on virtualized computer hardware (e.g., one or more virtual machines), in one or more containers, in one or more cloud computing instances (e.g., one or more AWS EC2 instances), in one or more serverless compute instances offered such as those offered by a cloud services provider, in one or more event-driven compute services such as those offered by a cloud services provider, or in some other execution environment.

In some examples, a non-transitory computer-readable medium storing computer-readable instructions may be provided in accordance with the principles described herein. The instructions, when executed by a processor of a computing device, may direct the processor and/or computing device to perform one or more operations, including one or more of the operations described herein. Such instructions may be stored and/or transmitted using any of a variety of known computer-readable media.

A non-transitory computer-readable medium as referred to herein may include any non-transitory storage medium that participates in providing data (e.g., instructions) that may be read and/or executed by a computing device (e.g., by a processor of a computing device). For example, a non-transitory computer-readable medium may include, but is not limited to, any combination of non-volatile storage media and/or volatile storage media. Exemplary non-volatile storage media include, but are not limited to, read-only memory, flash memory, a solid-state drive, a magnetic storage device (e.g., a hard disk, a floppy disk, magnetic tape, etc.), ferroelectric random-access memory ("RAM"), and an optical disc (e.g., a compact disc, a digital video disc, a Blu-ray disc, etc.). Exemplary volatile storage media include, but are not limited to, RAM (e.g., dynamic RAM).

One or more embodiments may be described herein with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claims. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality.

To the extent used, the flow diagram block boundaries and sequence could have been defined otherwise and still perform the certain significant functionality. Such alternate definitions of both functional building blocks and flow diagram blocks and sequences are thus within the scope and spirit of the claims. One of average skill in the art will also recognize that the functional building blocks, and other illustrative blocks, modules and components herein, can be implemented as illustrated or by discrete components, application specific integrated circuits, processors executing appropriate software and the like or any combination thereof.

While particular combinations of various functions and features of the one or more embodiments are expressly described herein, other combinations of these features and functions are likewise possible. The present disclosure is not limited by the particular examples disclosed herein and expressly incorporates these other combinations.

## Claims

1. A method of automated deployment and maintenance of a cloud fleet, comprising:
receiving a request to generate a cloud fleet in a cloud computing environment, wherein the request comprises a listing of selectable cloud computing instance configurations, an allocation strategy, and a resource allocation comprising at least one of: an on-demand resource requirement and a spot resource requirement;
selecting, for each cloud computing instance configuration of one or more cloud computing instance configurations included in the listing of selectable cloud computing instance configurations, based a capacity of the cloud computing environment, a corresponding number of instances to satisfy the resource allocation, including:
selecting one or more cloud computing instance configurations from the listing of selectable cloud computing instance configurations based on the allocation strategy; and
creating, based on the corresponding number of instances for each cloud computing instance configuration, the cloud fleet comprising at least one of: one or more on-demand cloud computing instances and one or more spot cloud computing instances.

2. The method of claim 1, at least one of:
wherein the allocation strategy comprises capacity as a primary factor and financial cost as a secondary factor;
wherein selecting, for each cloud computing instance configuration of the one or more cloud computing instance configurations, the corresponding number of instances comprises limiting a scope of usable cloud computing instance configurations in the cloud fleet as defined in one or more configuration restrictions;
wherein selecting, for each cloud computing instance configuration of the one or more cloud computing instance configurations, the corresponding number of instances comprises preventing allocation of a number of virtual central processing unit (vCPU) cores for a particular grouping of cloud computing instance configurations exceeding a maximum number of vCPU cores defined in a vCPU quota; and
wherein selecting, for each cloud computing instance configuration of the one or more cloud computing instance configurations, the corresponding number of instances comprises preferentially selecting one or more reserved instance configurations for inclusion in the one or more cloud computing instance configurations.

3. The method of claim 1 or 2, wherein the method further comprises:
detecting an eviction signal for a spot cloud computing instance of the cloud fleet; and
creating, in response to detecting the eviction signal, an other spot cloud computing instance for the cloud fleet having a different cloud computing instance configuration than the spot cloud computing instance.

4. The method of claim 3, wherein the eviction signal comprises a signal indicating an impending eviction of the spot cloud computing instance, and wherein the other spot cloud computing instance is created before the spot cloud computing instance is evicted.

5. The method of one of claims 1 to 4, further comprising updating the on-demand resource requirement in response to a user-initiated deletion of an on-demand cloud computing instance from the cloud fleet.

6. An apparatus for automated deployment and maintenance of a cloud fleet, comprising:
a memory; and
one or more processing devices, operatively coupled to the memory, the one or more processing devices configured to:
receive a request to generate a cloud fleet in a cloud computing environment, wherein the request comprises a listing of selectable cloud computing instance configurations, an allocation strategy, and a resource allocation comprising at least one of: an on-demand resource requirement and a spot resource requirement;
select, for each cloud computing instance configuration of one or more cloud computing instance configurations included in the listing of selectable cloud computing instance configurations, based a capacity of the cloud computing environment, a corresponding number of instances to satisfy the resource allocation, wherein the one or more processing devices are further configured to:
select one or more cloud computing instance configurations from the listing of selectable cloud computing instance configurations based on the allocation strategy; and
create, based on the corresponding number of instances for each cloud computing instance configuration, the cloud fleet comprising at least one of: one or more on-demand cloud computing instances and one or more spot cloud computing instances.

7. The apparatus of claim 6, wherein the allocation strategy comprises capacity as a primary factor and financial cost as a secondary factor.

8. The apparatus of claim 6 or 7, at least one of:
wherein, to select, for each cloud computing instance configuration of the one or more cloud computing instance configurations, the corresponding number of instances, the processing device is configured to limit a scope of usable cloud computing instance configurations in the cloud fleet as defined in one or more configuration restrictions;
wherein, to select, for each cloud computing instance configuration of the one or more cloud computing instance configurations, the corresponding number of instances, the processing device is configured to prevent allocation of a number of virtual central processing unit (vCPU) cores for a particular grouping of cloud computing instance configurations exceeding a maximum number of vCPU cores defined in a vCPU quota; and
wherein, to select, for each cloud computing instance configuration of the one or more cloud computing instance configurations, the corresponding number of instances, the processing device is configured to preferentially selecting one or more reserved instance configurations for inclusion in the one or more cloud computing instance configurations.

9. The apparatus of one of claims 6 to 8, wherein the processing device is further configured to:
detect an eviction signal for a spot cloud computing instance of the cloud fleet; and
create, in response to detecting the eviction signal, an other spot cloud computing instance for the cloud fleet having a different cloud computing instance configuration than the spot cloud computing instance.

10. The apparatus of claim 9, wherein the eviction signal comprises a signal indicating an impending eviction of the spot cloud computing instance, and wherein the other spot cloud computing instance is created before the spot cloud computing instance is evicted.

11. The apparatus of one of claims 6 to 10, wherein the processing device is further configured to update the resource allocation in response to a user-initiated deletion of a cloud computing instance from the cloud fleet.

12. A non-transitory computer readable storage medium storing instructions which, when executed, cause a processing device to:
receive a request to generate a cloud fleet in a cloud computing environment, wherein the request comprises a listing of selectable cloud computing instance configurations, an allocation strategy, and a resource allocation comprising at least one of: an on-demand resource requirement and a spot resource requirement;
select, for each cloud computing instance configuration of one or more cloud computing instance configurations included in the listing of selectable cloud computing instance configurations, based a capacity of the cloud computing environment, a corresponding number of instances to satisfy the resource allocation, wherein the instructions, when executed, further cause the processing device to:
select one or more cloud computing instance configurations from the listing of selectable cloud computing instance configurations based on the allocation strategy; and
create based on the corresponding number of instances for each cloud computing instance configuration, the cloud fleet comprising at least one of: one or more on-demand cloud computing instances and one or more spot cloud computing instances.

13. The non-transitory computer readable storage medium of claim 12, wherein the allocation strategy comprises capacity as a primary factor and cost as a secondary factor.

14. The non-transitory computer readable storage medium of claim 12 or 13, wherein, to select, for each cloud computing instance configuration of the one or more cloud computing instance configurations, the corresponding number of instances, the instructions, when executed, cause the processing device to limit a scope of usable cloud computing instance configurations in the cloud fleet as defined in one or more configuration restrictions.

15. The non-transitory computer readable storage medium of one of claims 12 to 14, wherein, to select, for each cloud computing instance configuration of the one or more cloud computing instance configurations, the corresponding number of instances, the instructions, when executed, cause the processing device to prevent allocation of a number of virtual central processing unit (vCPU) cores for a particular grouping of cloud computing instance configurations exceeding a maximum number of vCPU cores defined in a vCPU quota.
